# EUROPEAN PATENT APPLICATION

(11) **EP 4 742 326 A1**
(43) Date of publication of application: **13.05.2026**
(21) Application number: 24836324.4
(22) Date of filing: 03.07.2024
(51) Int. Cl.: H01M 4/62, H01M 4/48, H01M 4/131, H01M 4/1391, H01M 10/052, H01M 4/02

(54) **ELECTRODE ADDITIVE, NEGATIVE ELECTRODE COMPRISING SAME FOR LITHIUM SECONDARY BATTERY, AND METHOD FOR MANUFACTURING NEGATIVE ELECTRODE FOR LITHIUM SECONDARY BATTERY**

(30) Priority: 03.07.2023 US 202363511709 P
(71) Applicant: Graphenide Technology Co., Ltd., Seoul 06978 (KR)
(72) Inventor: KIM, Hansu, Seoul 07214 (KR); KIM, Junho, Seoul 02840 (KR); LEE, Jiwhan, Uiwang-si Gyeonggi-do 16016 (KR); SHIN, Ik Soo, Seoul 03631 (KR)
(74) Representative: V.O.
(86) International application number: PCT/KR2024/009375
(87) International publication number: WO 2025/009876

(57) **Abstract**

The present invention relates to an electrode additive, an anode for a lithium secondary battery including the same, and a method for manufacturing an anode for a lithium secondary battery. The electrode additive of the present invention mitigates damage due to volume change of the anode active material and can improve the phenomenon of energy density reduction of the battery without reducing the density of the electrode. Furthermore, it is dissociated into an alkali cation and a carbon-based anion like an ionic compound in the electrolyte to compensate for cation loss in the electrolyte, thereby remarkably improving the capacity retention performance.

## Description

### BACKGROUND

### 1. Field

The present invention relates to an electrode additive, an anode for a lithium secondary battery including the same, and a method for manufacturing an anode for a lithium secondary battery.

### 2. Description of Related Art

The scope of utilization of lithium secondary batteries is gradually expanding, ranging from small electronic devices such as conventional smartphones to new and renewable energy storage systems and energy storage sources capable of driving electric vehicles. Particularly, in order to solve energy and environmental problems, research to utilize renewable energy sources such as electric vehicles, solar heat, solar light, and wind energy is actively progressing, and thus, large-scaling of batteries used for this purpose is required.

Lithium-ion secondary batteries are the most promising batteries capable of driving this, but in the case of lithium-ion batteries employing currently commercialized graphite as a main anode material for a lithium secondary battery, many parts need to be improved to satisfy the performance required by the market due to low theoretical capacity. Especially in the case of electric vehicles replacing internal combustion engine automobiles, the distance that batteries at the current level can travel on a single charge is unsatisfactory compared to internal combustion engines, and thus, an anode having high energy density and long lifespan performance is required. Accordingly, anode active material materials such as silicon (Si), tin (Sn), and germanium (Ge) which can exhibit high capacity by alloying with lithium during charging of the battery and dealloying during discharging are receiving great attention.

Particularly, while graphite stores 1 lithium ion per 6 carbon atoms, silicon can store 4.4 lithium ions per 1 silicon atom, so silicon dramatically improves energy density (capacity increases by 10 times or more compared to graphite), which is advantageous for not only increasing the driving distance of electric vehicles but also for the fast charging design of batteries. Furthermore, silicon is an economical and eco-friendly material. Accordingly, silicon is drawing attention as a next-generation anode material that has overcome the capacity limitations of graphite anode material and escaped from the absolute dependence on China for graphite, and is actually used in the form of an additive of about 5 wt% or less of graphite anode material.

However, silicon undergoes repeated volume expansion and contraction due to alloying and dealloying during charging and discharging, resulting in the generation of cracks and fracture of particles as charging and discharging proceed, and gradually decreasing capacity, which is disadvantageous in that the lifespan characteristic is not excellent. In order to solve these problems, methods for manufacturing an electrode using the active material oxide, methods for suppressing volume change through structural improvement or active material coating of the active material, and methods for improving the performance of a binder of the electrode have been studied, but the effects were insignificant.

Accordingly, the present inventors have found that by introducing a composite of a carbon material including an oxygen-containing functional group and lithium into an anode for a lithium secondary battery, it can be dissociated like an ionic compound to compensate for the loss of lithium, and the phenomenon of peeling or cracking due to the volume change of the active material can be remarkably improved, thereby improving the electrochemical performance of the lithium secondary battery, leading to the completion of the present invention.

### SUMMARY

The present invention was devised to solve the above problems, and an object of the present invention is to compensate for cation loss by being dissociated in an electrolyte and to bond with a binder, thereby improving the mechanical strength of the electrode and remarkably improving damage due to volume expansion of the anode active material, and to provide an electrode additive including a composite of a carbon material including an oxygen-containing functional group and lithium, and an anode for a lithium secondary battery including the same.

One aspect of the present invention provides an electrode additive including a composite of a carbon material including an oxygen-containing functional group; and lithium.

Another aspect of the present invention provides an anode for a lithium secondary battery including the electrode additive; and an anode active material.

Still another aspect of the present invention provides a lithium secondary battery including the anode.

Still another aspect of the present invention provides a capacitor including the anode.

Still another aspect of the present invention provides a method for manufacturing an anode for a lithium secondary battery, including:
(I) preparing an electrode additive by mixing a carbon material including an oxygen-containing functional group and a lithium precursor;
(II) preparing an anode slurry by adding the electrode additive obtained in the step (I) and the anode active material to a solvent; and
(III) applying and drying the anode slurry.

The electrode additive of the present invention includes a composite of a carbon material including an oxygen-containing functional group; and lithium, thereby remarkably improving the phenomenon of density reduction of the electrode and the phenomenon of energy density reduction of the battery. Further, the composite may be dissociated into an alkali cation and a carbon-based anion in the electrolyte, and the cation may compensate for lithium consumed in the electrolyte, particularly at the interface, thereby improving capacity and capacity retention performance, and the carbon-based anion may bond with a binder to improve dispersion of the binder, thereby increasing the mechanical strength of the electrode and remarkably improving the phenomenon of peeling or cracking due to volume expansion of silicon.

In addition, the electrode additive of the present invention can regulate the segmental mobility of the binder chain to impart sufficient flexibility to withstand volume change of the silicon electrode during cycling.

In addition, the electrode additive of the present invention uses abundant polar functional groups at the edges to interact with the polar groups (-COOH) of the binder to form hydrogen bonds, thereby improving the adhesion between components of the silicon-based electrode, including the copper foil.

### BRIEF DESCRIPTION OF THE DRAWINGS

FIG. 1 shows a scanning electron microscope (SEM) image of the electrode additive prepared in Example 1 of the present invention.
FIG. 2 shows a transmission electron microscope (TEM) image of the electrode additive prepared in Example 1 of the present invention.
FIG. 3 shows a scanning electron microscope (SEM) image of Comparative Example 1 (SiO) of the present invention.
FIG. 4 shows a scanning electron microscope (SEM) image of Comparative Example 2 (Si) of the present invention.
FIG. 5 shows (a) the first, (b) the third cycle charge/discharge curves, and (c) the long-term lifespan characteristics of the electrode prepared in Example 1 of the present invention.
FIG. 6 shows (a) the first, (b) the third cycle charge/discharge curves, and (c) the long-term lifespan characteristics of the electrode prepared in Example 2 of the present invention.
FIG. 7 shows (a) the first, (b) the third cycle charge/discharge curves, and (c) the long-term lifespan characteristics of the electrode prepared in Comparative Example 1 of the present invention.
FIG. 8 shows (a) the charge/discharge capacity and (b) the long-term lifespan characteristics of the electrode prepared in Example 3 of the present invention.
FIG. 9 shows (a) the charge/discharge capacity and (b) the long-term lifespan characteristics of the electrode prepared in Comparative Example 2 of the present invention.
FIG. 10 shows the specific capacity according to the cycle and a scanning electron microscope (SEM) image of a cross-section of a half-cell using the electrodes of Example 5 and Comparative Example 3 of the present invention.
FIG. 11 shows the specific capacity graph according to the cycle of a half-cell using the electrodes of Examples 6 to 7 and Comparative Example 4 of the present invention.
FIG. 12 is a graph showing the specific capacity and Coulombic efficiency according to the cycle of a half-cell using the electrodes of Example 8 and Comparative Example 5 of the present invention.
FIG. 13 shows a scanning electron microscope (SEM) image of the electrode prepared in Example 8 of the present invention.
FIG. 14 shows (a) the lifespan characteristic and (b) the rate characteristic graph of a half-cell using the electrodes of Examples 9 to 10 and Comparative Example 6 of the present invention.
FIG. 15 shows photographic images (a, b) after preparation and (c, d) after bending of (a, c) PAA 100 wt% and (b, d) a binder including the electrode additive prepared in Example 1 of the present invention (PAA 70 wt% + additive 30 wt%).
FIG. 16 shows photographic images of the process of the tensile test results of PAA 100 wt% and a binder including the electrode additive prepared in Example 1 of the present invention (PAA 70 wt% + additive 30 wt%).

### DETAILED DESCRIPTION

In describing the present invention, detailed descriptions of related known techniques are omitted if it is determined that they may unnecessarily obscure the gist of the present invention. When "comprises," "has," "consists of," etc. are used as mentioned in this specification, other components may be added unless "~ only" is used. In addition, terms such as "comprise" or "have" are intended to designate the existence of a feature, number, step, component, or combination thereof described in the specification, and are not intended to exclude the existence or addition possibility of one or more other features, numbers, steps, components, or combinations thereof. Furthermore, when a component is expressed in the singular, it includes the case where it includes the plural unless there are explicitly stated particulars.

Hereinafter, the present invention will be described in more detail with reference to the accompanying drawings and examples.

The present invention provides an electrode additive including a composite of a carbon material including an oxygen-containing functional group; and lithium.

Generally, electrodes incorporating a carbon material have been used to improve electrical conductivity, but the carbon material causes a decrease in the density of the electrode, resulting in a decrease in the energy density of the battery including the electrode, and there was a problem that operation is impossible when the electron transfer path is damaged due to volume change of the anode active material during charging and discharging.

Accordingly, the present invention prepared an electrode additive including a composite of a carbon material including an oxygen-containing functional group; and lithium. The electrode additive of the present invention is applied to an electrode to remarkably improve the phenomenon of energy density reduction of the battery including the same without reducing the density of the electrode, and is mixed with the anode active material to effectively alleviate volume change due to charging and discharging. In addition, the electrode additive of the present invention has advantages in that it has excellent mechanical strength and conductivity, and high specific surface area.

The lithium may be bonded to the oxygen-containing functional group. More specifically, the oxygen-containing functional group may exist as an anionic functional group, and thus may be bonded to a lithium cation, which is an ion of the lithium. Thereby, the electrode additive of the present invention may be dissociated into a lithium cation and a carbon-based anion like an ionic compound in the electrolyte. The lithium cation can increase the cation flux between the electrode and the electrolyte interface to promote smooth electrochemical reaction of the electrode and compensate for cation loss in the electrolyte due to surface film formation, and thus, the electrode including the same can remarkably improve the capacity retention performance of the battery.

The oxygen-containing functional group may be one or more of a hydroxyl group, an ether group, an aldehyde group, an epoxy group, an amide group, a carboxyl group, and a ketone group, and more preferably, one or more of a hydroxyl group, a carboxyl group, and an ether group.

The carbon material may be one or more of graphene quantum dots, graphene, graphene oxide, carbon black, carbon nanotubes, graphite, fullerene, and carbon nanofiber, and more preferably, one or more of graphene quantum dots, graphene oxide, and carbon nanofiber, and most preferably, graphene quantum dots.

Particularly, the carbon material may be Graphene quantum dot, which has the advantage of having excellent conductivity unlike other carbon materials and simultaneously being able to improve the mechanical properties during electrochemical evaluation of the electrode.

Based on 100 wt% of the total electrode additive, the lithium may be included in an amount of 8 to 20 wt%, preferably 13 to 18 wt%. If the lithium content is below the lower limit, it may be difficult to expect the effect of increasing the capacity retention performance of the battery containing it, and conversely, if it exceeds the upper limit, the reliability of the electrode additive may decrease due to residual impurities in the additive during the synthesis process, and it may hinder the effect of improving electrical conductivity.

The size of the carbon material may be 12 nm or less. If the size of the carbon material exceeds 12 nm, it may increase the pi-pi interaction between the carbon materials, which is undesirable because pi-pi interaction may cause aggregation between the carbon materials, thereby reducing the reliability of the device. Although the lower limit of the carbon material size is not largely limited, the lower limit may be 2 nm in that when it is less than 2 nm, not only the cation mobility of the carbon material decreases but also the lattice energy decreases, which may cause a decrease in ionic conductivity.

Another aspect of the present invention provides an anode for a lithium secondary battery including the electrode additive; and an anode active material.

The anode active material may include silicon (Si), tin (Sn), germanium (Ge), an oxide thereof, an alloy thereof, or a combination thereof.

The oxide of silicon (Si), tin (Sn), and germanium (Ge) may refer to silicon oxide (SiOx, 0<x≤2), tin oxide (SnOy, 0<y≤2), and germanium oxide (GeOz, 0<z≤2).

The alloy of silicon (Si), tin (Sn), and germanium (Ge) may refer to a silicon alloy (Si-A), a tin alloy (Sn-B), and a germanium alloy (Ge-C). In this case, A, B, and C may each be one or more of a metal or a metalloid, for example, two or more metalloids, two or more metals, one metal, one metalloid, or one or more metals and one or more metalloids.

In the silicon alloy (Si-A), A may be one or more of an alkali metal, an alkali earth metal, a transition metal, a post transition metal, and a metalloid excluding silicon.

In the tin alloy (Sn-B), B may be one or more of an alkali metal, an alkali earth metal, a transition metal, a metalloid, and a post transition metal excluding tin.

In the germanium alloy (Ge-C), C may be one or more of an alkali metal, an alkali earth metal, a transition metal, a post transition metal, and a metalloid excluding germanium.

The weight ratio of the anode active material and the electrode additive may be 100:1 to 8, and preferably 100:2 to 5. If the electrode additive is less than the lower limit based on 100 weight of the anode active material, the effect of suppressing volume change of the electrode and improving capacity retention performance cannot be expected, and conversely, if it is included in excess of the upper limit, the amount of dissociation no longer increases, which may decrease the energy density, and the electrode additive may not be evenly distributed in the anode, which may cause an aggregation phenomenon in the electrode, thereby increasing resistance in the intercalation/deintercalation process of lithium ions in the battery.

The anode for a lithium secondary battery may further include a binder. The binder can be used without limitation as long as it is a polymer binder used in the art, and for example, polyvinylidene fluoride, polyethylene oxide, polyacrylic acid, polyaniline, polystyrene, or a mixture thereof may be used.

Generally, binders were introduced into electrodes to alleviate the phenomenon of capacity decrease as charging and discharging proceed, due to physical degradation of the material and electrical degradation of the electrode caused by rapid volume change of the active material during charging and discharging. However, conventional binders had low electrical conductivity, which lowered the electrical conductivity of the electrode and resulted in a decrease in energy density, and lacked mechanical strength and flexibility, making it difficult to fully cope with the large volume change of silicon.

The anode for a lithium secondary battery of the present invention, when further including a binder, allows the binder to bond with the carbon-based anion formed by the dissociation of the electrode additive in the electrolyte. The binder is bonded to the carbon-based anion, thereby improving dispersion, which can not only improve the mechanical strength of the electrode including the same but also improve electrical conductivity, and can remarkably improve the electron transfer path damaged or lost due to expansion and contraction of the anode active material during charging and discharging, compared to when the binder is used alone.

The binder may be included in an amount of 5 to 20 wt% based on 100 wt% of the total anode for a lithium secondary battery. If the content of the binder is less than the lower limit, it may be difficult to expect the effect of buffering the rapid volume change of the active material due to binder addition, and conversely, if it exceeds the upper limit, dispersion may be reduced because it may not sufficiently bond with the carbon-based anion.

The anode for a lithium secondary battery may further include a conductive material. The conductive material is used to impart conductivity to the electrode, and any electron conductive material can be used in the battery being configured, as long as it does not cause chemical change, for example, carbon-based materials such as natural graphite, artificial graphite, carbon black, acetylene black, Ketjenblack, and carbon fiber; metal-based materials such as metal powder or metal fiber of copper, nickel, aluminum, silver, etc.; conductive polymers such as polyphenylene derivatives; or conductive materials including a mixture thereof may be used.

The conductive material may be included in an amount of 5 to 15 wt% based on 100 wt% of the total anode for a lithium secondary battery. If the content of the conductive material is less than the lower limit, the effect of increasing conductivity due to conductive material addition may be difficult to expect, and conversely, if it exceeds the upper limit, the content of the anode active material relatively decreases, and the capacity of the lithium secondary battery may decrease.

Still another aspect of the present invention provides a lithium secondary battery including the anode.

Still another aspect of the present invention provides a capacitor including the anode.

Still another aspect of the present invention may provide a device including the anode, and the device may be any one of communication equipment, Energy Storage System (ESS), and means of transportation.

Still another aspect of the present invention provides a method for manufacturing an anode for a lithium secondary battery, including:
(I) preparing an electrode additive by mixing a carbon material including an oxygen-containing functional group and a lithium precursor;
(II) preparing an anode slurry by adding the electrode additive obtained in the step (I) and the anode active material to a solvent; and
(III) applying and drying the anode slurry.

The method for manufacturing an anode for a lithium secondary battery of the present invention uses the above-described electrode additive, thereby having very excellent aqueous dispersion capability, and not only being able to utilize the conventional anode material process as is, but also being capable of process reduction.

Hereinafter, each step of the method for manufacturing an anode for a lithium secondary battery of the present invention will be described in more detail.

### (I) Step of preparing an electrode additive by mixing a carbon material including an oxygen-containing functional group and a lithium precursor

First, a composite of a carbon material and lithium is prepared by mixing a carbon material including an oxygen-containing functional group and a lithium precursor.

The oxygen-containing functional group may be one or more of a hydroxyl group, an ether group, an aldehyde group, an epoxy group, an amide group, a carboxyl group, and a ketone group, and more preferably, one or more of a hydroxyl group, a carboxyl group, and an ether group.

The carbon material may be one or more of graphene quantum dots, graphene, graphene oxide, carbon black, carbon nanotubes, graphite, fullerene, and carbon nanofiber, and more preferably, one or more of graphene quantum dots, graphene oxide, and carbon nanofiber.

When the carbon material is a graphene quantum dot, the graphene quantum dot may be manufactured by a method including:
(a) preparing a mixed solution by mixing a carbon material and an acid solution; and
(b) hydrothermally synthesizing the mixed solution at 80 to 120 °C for 5 to 36 hours.

The carbon material may be one or more of graphene, graphene oxide, carbon black, carbon nanotubes, graphite, fullerene, and carbon nanofiber.

The size of the carbon material may be 12 nm or less.

The lithium precursor may be one or more of lithium hydroxide, lithium carbonate, lithium sulfate, lithium oxide, and lithium chloride.

The lithium may be included in an amount of 8 to 20 wt%, preferably 13 to 18 wt% based on 100 wt% of the total electrode additive.

### (II) Step of preparing an anode slurry by adding the electrode additive and the anode active material obtained in the step (I) to a solvent

The solvent may be ethanol, toluene, heptane, butyrate, xylene, hexane, and a combination thereof, but is not largely limited thereto.

The anode active material may include silicon (Si), tin (Sn), germanium (Ge), an oxide thereof, an alloy thereof, or a combination thereof.

The oxide of silicon (Si), tin (Sn), and germanium (Ge) may refer to silicon oxide (SiOx, 0<x≤2), tin oxide (SnOy, 0<y≤2), and germanium oxide (GeOz, 0<z≤2).

The alloy of silicon (Si), tin (Sn), and germanium (Ge) may refer to a silicon alloy (Si-A), a tin alloy (Sn-B), and a germanium alloy (Ge-C). In this case, A, B, and C may each be one or more of a metal or a metalloid, for example, two or more metalloids, two or more metals, one metal, one metalloid, or one or more metals and one or more metalloids.

The weight ratio of the anode active material and the electrode additive may be 100:1 to 8, and preferably 100:2 to 5.

The anode slurry may further include a binder. The binder is one or more of polyvinylidene fluoride, polyethylene oxide, polyacrylic acid, polyaniline, and polystyrene.

The binder may be included in an amount of 5 to 20 wt% based on 100 wt% of the total anode for a lithium secondary battery.

The anode slurry may further include a conductive material. The conductive material may be one or more of carbon-based materials such as natural graphite, artificial graphite, carbon black, acetylene black, Ketjenblack, and carbon fiber; metal-based materials such as metal powder or metal fiber of copper, nickel, aluminum, silver, etc.; conductive polymers such as polyphenylene derivatives; or conductive materials including a mixture thereof.

The conductive material may be included in an amount of 5 to 15 wt% based on 100 wt% of the total anode for a lithium secondary battery.

### (III) Step of applying and drying the anode slurry

Next, the anode is manufactured by applying and drying the anode slurry on a current collector.

The drying may be performed at 80 to 200 °C for 30 minutes to 5 hours, and preferably at 100 to 150 °C for 1 to 3 hours. If the drying temperature and time are less than the lower limit, the solvent may not sufficiently evaporate, thereby deteriorating the performance of the electrode or causing side reactions, and conversely, if it exceeds the upper limit, the shape of the manufactured electrode may be uneven due to rapid drying of the organic solvent.

According to the most preferred embodiment of the present invention, the carbon material is a graphene quantum dot including a hydroxyl group and a carboxyl group, the lithium precursor is lithium hydroxide, the lithium is included in an amount of 13 to 18 wt% based on 100 wt% of the total electrode additive, the size of the carbon material is 12 nm or less, the anode active material is silicon monoxide (SiO), the anode active material and the electrode additive are mixed in a weight ratio of 100:2 to 5, the drying is performed at 100 to 150 °C for 1 to 3 hours, and polyacrylic acid as a polymer binder may be included in an amount of 5 to 20 wt% based on 100 wt% of the total anode for a lithium secondary battery.

When all the conditions of the most preferred embodiment are satisfied, the capacity of the battery using the manufactured anode was maintained at an excellent level during 300 charge/discharge cycles, and the mechanical strength and stability were also excellent.

However, when any one of the above conditions was not satisfied, the capacity of the battery using the manufactured anode decreased after 100 charge/discharge cycles, and partial degradation of the anode was observed after 300 charge/discharge cycles.

Hereinafter, the present invention will be described in detail by providing embodiments for specific description. However, the embodiments according to the present invention may be modified into various other forms, and the scope of the present invention should not be construed as being limited to the embodiments described below. The embodiments of the present specification are provided to more completely describe the present invention to a person having average knowledge in the art.

### Example 1. SiO-3 wt%

### (1) Preparation of Electrode Additive

Graphene oxide (GO) including a hydroxyl group and a carboxyl group was dispersed in a mixed solution in which nitric acid and sulfuric acid were mixed at a volume ratio of 1:3, and hydrothermally synthesized for 24 hours while applying heat to a level of 100 degrees and stirring for a certain time, to prepare graphene quantum dots having a size of 12 nm or less. A 1 M lithium hydroxide solution was added to the solution after the reaction of the step to prepare an ionic compound (carbon material-lithium composite) composed of a carbon-based anion and a lithium cation. Centrifugation was repeatedly performed by mixing ethanol to remove impurities, and the precipitate was removed. The supernatant of the solution from which the precipitate was removed was dried to obtain an electrode additive powder. At this time, lithium was included in an amount of 16 wt% based on 100 wt% of the total electrode additive powder.

### (2) Preparation of Electrode

Silicon oxide (SiO) powder 0.4 g as an anode active material was dry-mixed to uniformize the particle size of the anode active material. Carbon black powder 0.05 g is added to the powder that has been dry-mixed, and dry mixing is performed. Dry mixing is carried out with a mortar or a paint shaker.

A binder solution in which polyacrylic acid 0.05 g is dissolved in distilled water and the obtained electrode additive 0.015 g are mixed, and then mixed with the dry-mixed powder mixture of the active material and the conductive material. The viscosity of the anode slurry is adjusted through the solvent of the binder solution used, and then the electrode slurry is placed on a copper foil and casting is performed through a doctor blade. The cast copper foil is dried in an 80 degree air atmosphere and then rolled. The rolled copper foil was subjected to vacuum drying at 120 degrees for 2 hours or more to manufacture an anode.

### Example 2. SiO-1.5 wt%

An anode was manufactured in the same manner as in Example 1, except that an electrode additive corresponding to 1.5 wt% of the electrode weight was used.

### Example 3. Si-3 wt%

An anode was manufactured in the same manner as in Example 1, except that silicon (Si) was used as the anode active material.

Table 1 below shows the content of the anodes manufactured in Examples 1 to 3.

**Table 1**

| Classification | wt% | | | |
|---|---|---|---|---|
| | Electrode Additive | Anode Active Material | Conductive Material | Binder |
| Example 1 | 3 | 77.6 | 9.7 | 9.7 |
| Example 2 | 1.5 | 78.8 | 9.85 | 9.85 |
| Example 3 | 3 | 77.4 | 9.7 | 9.7 |

### Example 4

An anode was manufactured by mixing a C-SiO active material (micro size, median particle size = 7 um), a conductive material (carbon black), a binder (PAA), and the electrode additive prepared in Example 1 in a weight ratio of 80:10:7.7:2.3. At this time, the electrode loading level was 1.5 mg/cm2.

### Example 5. micro C-SiO

An anode was manufactured in the same manner as in Example 1, and the loading level was 1.7 mg/cm2.

### Example 6. micro Si

An anode was manufactured by mixing Si active material (micro size), a conductive material (carbon black), a binder (PAA), and the electrode additive prepared in Example 1 in a weight ratio of 80:10:7.7:2.3.

### Example 7. micro Si

An anode was manufactured by mixing Si active material (micro size), a conductive material (carbon black), a binder (PAA), and the electrode additive prepared in Example 1 in a weight ratio of 80:10:8.7:1.3.

### Example 8

C-SiO active material (micro size, median particle size = 13 um), conductive material (carbon black), binder (CMC), and the electrode additive prepared in Example 1 were mixed in a weight ratio of 75:10:12.5:2.5 to manufacture an anode.

### Example 9

An anode was manufactured by mixing Si active material (sub-micro size, median particle size = 800 nm), a conductive material (carbon black), a binder (PAA), and the electrode additive prepared in Example 1 in a weight ratio of 60:20:17:3.

### Example 10

An anode was manufactured by mixing Si active material (sub-micro size, median particle size = 800 nm), a conductive material (carbon black), a binder (PAA), and the electrode additive prepared in Example 1 in a weight ratio of 60:20:18.5:1.5.

### Comparative Example 1. SiO

An electrode was manufactured in the same manner as in Example 1, except that the electrode additive was not used.

### Comparative Example 2. Si

An electrode was manufactured in the same manner as in Comparative Example 1, except that silicon powder was used as the anode active material.

### Comparative Example 3

C-SiO active material (micro size, median particle size = 7 um), conductive material (carbon black), and a binder (PAA) were mixed in a weight ratio of 80:10:10 to manufacture an anode.

### Comparative Example 4. micro Si

An anode was manufactured by mixing Si active material (micro size), a conductive material (carbon black), and a binder (PAA) in a weight ratio of 80:10:10.

### Comparative Example 5

An anode was manufactured by mixing C-SiO active material (micro size, median particle size = 13 um), a conductive material (carbon black), and a binder (CMC) in a weight ratio of 75:10:15.

### Comparative Example 6

An anode was manufactured by mixing Si active material (sub-micro size, median particle size = 800 nm), a conductive material (carbon black), and a binder (PAA) in a weight ratio of 60:20:20.

### Experimental Example 1. Analysis of Electrode Morphology

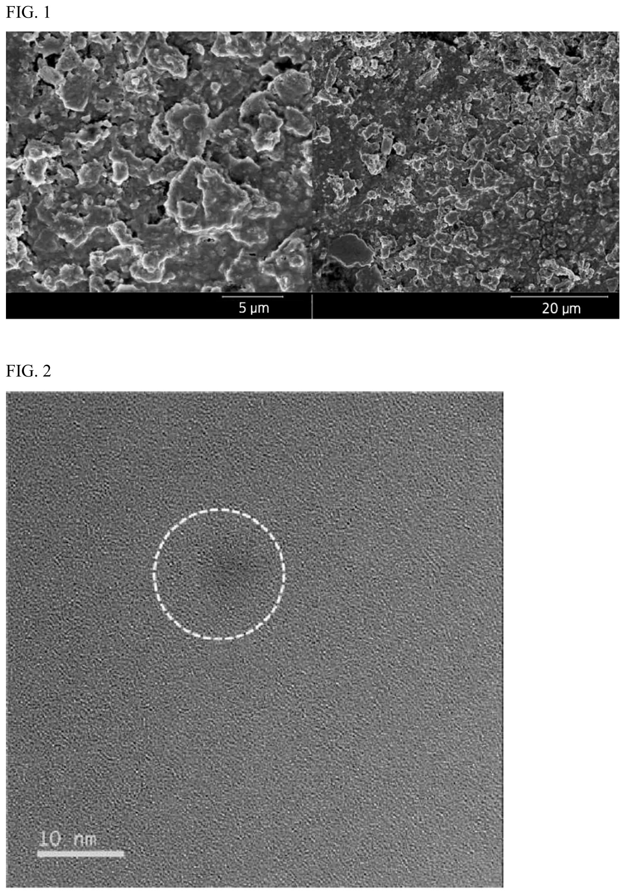

FIG. 1 shows a scanning electron microscope (SEM) image of the electrode additive prepared in Example 1 of the present invention.

FIG. 2 shows a transmission electron microscope (TEM) image of the electrode additive prepared in Example 1 of the present invention.

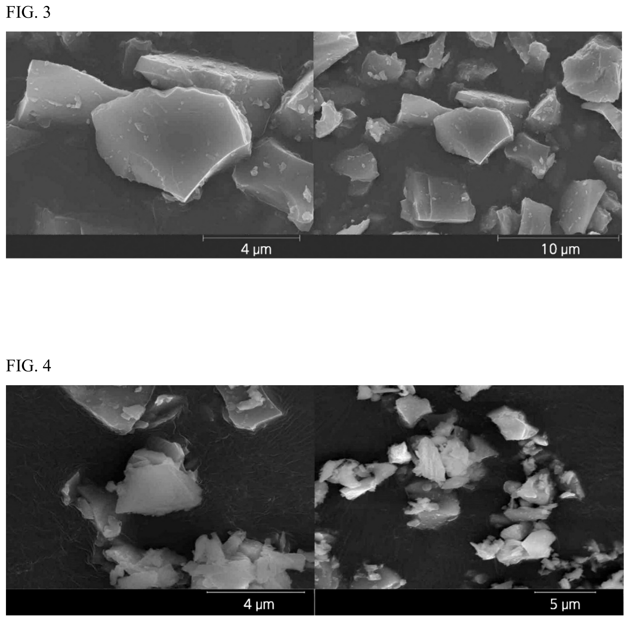

FIG. 3 shows a scanning electron microscope (SEM) image of Comparative Example 1 (SiO) of the present invention.

FIG. 4 shows a scanning electron microscope (SEM) image of Comparative Example 2 (Si) of the present invention.

Referring to FIGS. 1 to 2, it can be seen that the electrode additive prepared in Example 1 of the present invention is composed of carbon material particles at a level of 10 nm. On the other hand, referring to FIGS. 3 and 4, it can be seen that the size of the silicon oxide of Comparative Example 1 is 5 to 10 *µ*m, and the average size of the silicon powder of Comparative Example 2 is 5 to 7 *µ*m.

### Experimental Example 2. Analysis of Capacity and Lifespan Characteristics

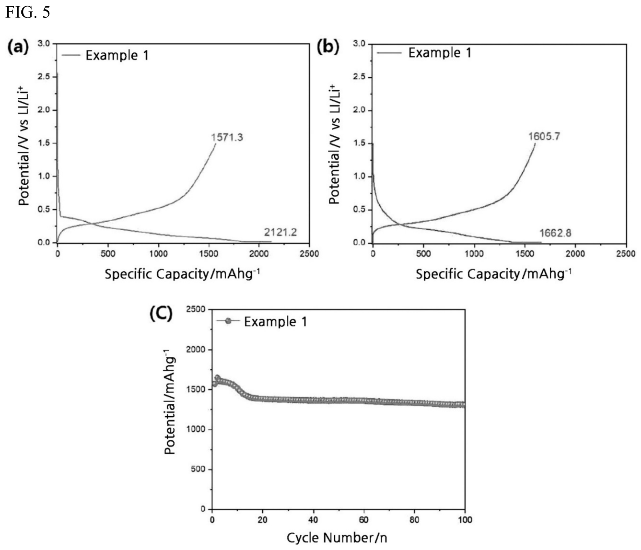

A secondary battery using the electrodes prepared in Examples 1 to 2 and Comparative Examples 1 to 2 underwent a formation process by charging at a constant current of 65mA, followed by a constant voltage process with a current of 13mA at 0.01V, and then underwent 2 cycles of discharge at a constant current of 65mA, and thereafter underwent a constant voltage charging process with a constant current of 650mA and a current of 13mA at 0.01V, followed by a discharge process with a constant current of 650mA, to analyze the charge/discharge characteristics, and the results are shown in FIGS. 5 to 7.

FIG. 5 shows (a) the first, (b) the third cycle charge/discharge curves, and (c) the long-term lifespan characteristics of the electrode prepared in Example 1 of the present invention.

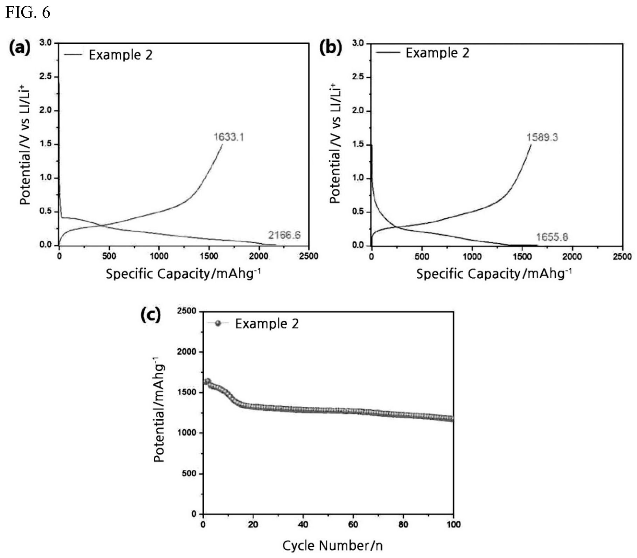

FIG. 6 shows (a) the first, (b) the third cycle charge/discharge curves, and (c) the long-term lifespan characteristics of the electrode prepared in Example 2 of the present invention.

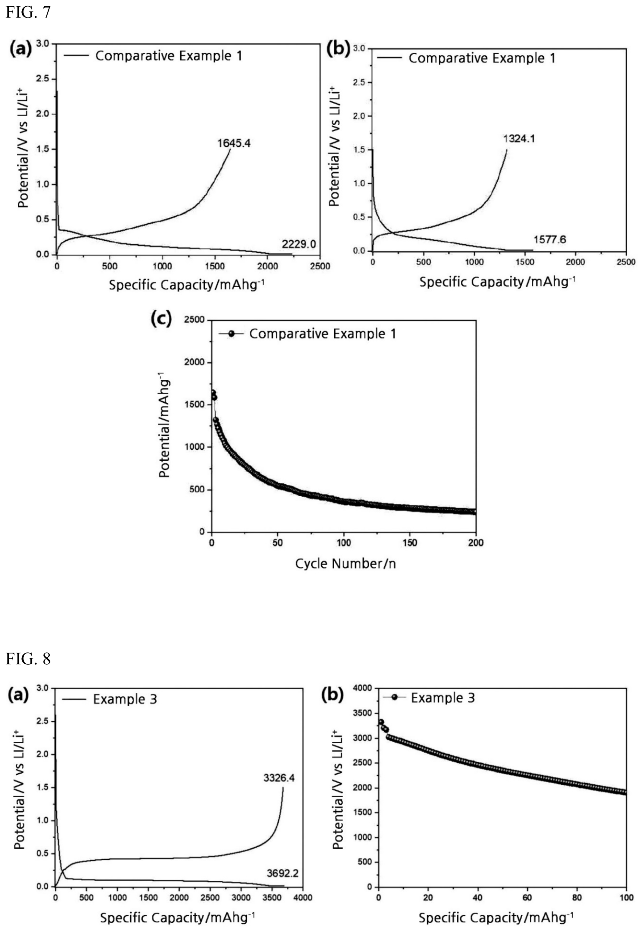

FIG. 7 shows (a) the first, (b) the third cycle charge/discharge curves, and (c) the long-term lifespan characteristics of the electrode prepared in Comparative Example 1 of the present invention.

Referring to FIG. 7 (a), it can be seen that the charge capacity of the electrode prepared in Comparative Example 1 using only silicon oxide powder is 2229 mAh/g, and the discharge capacity is 1645.4 mAh/g. On the other hand, referring to FIGS. 5 (a) and 6 (a), the charge capacity/discharge capacity of the electrodes prepared in Example 1 and Example 2 are 2121.2 mAhg-1 /1571.3 mAhg-1 and 2166.6 mAhg-1 /1633.1 mAhg-1, respectively, which shows that the charge/discharge efficiency is higher than that of Comparative Example 1.

Furthermore, referring to FIGS. 5 (b), 6 (b), and 7 (b), it can be seen that the charge/discharge efficiency is remarkably higher in Example 1 (96.6%) and Example 2 (96.0%) of the present invention compared to the charge/discharge efficiency of Comparative Example 1 (83.9%) in the third charge/discharge curve.

It is confirmed that the charge/discharge efficiency of the anode of the present invention is more excellent in the third cycle compared to the first cycle. This is because, in the case of the silicon oxide used as the anode active material in the Examples and Comparative Examples, carbon-coated silicon oxide was used, and the improved conductivity of the electrode due to the addition of the electrode additive of the present invention was directly reflected in the third cycle, which proceeds at a relatively high current, rather than in the formation stage, where charging and discharging proceed at a low current.

Referring to FIG. 7 (c), it can be seen that the capacity of the electrode of Comparative Example 1 using only silicon oxide powder rapidly decreased to less than half after 100 cycles. This is attributed to the fact that rapid volume change of the silicon oxide powder causes delamination between layers in the electrode and pulverization occurs, which is attributed to the collapse of the conductive pathway in the electrode and the decrease in capacity. On the other hand, referring to FIGS. 5 (c) and 6 (c), it can be confirmed that the electrodes prepared in Example 1 and Example 2 maintain their capacity during long-term cycling. Through this, it was confirmed that the electrode additive of the present invention can effectively buffer the rapid volume change of silicon oxide and maintains the capacity during long-term cycling by performing the role of a continuous electron transfer pathway.

A battery using the electrodes prepared in Examples 1 to 2 and Comparative Examples 1 to 2 underwent a formation process by charging at a constant current of 125mA, followed by a constant voltage process with a current of 25mA at 0.01V, and then underwent 2 cycles of discharge at a constant current of 125mA, and thereafter underwent a constant voltage charging process with a constant current of 500mA and a current of 25mA at 0.01V, followed by a discharge process with a constant current of 500mA, and the results are shown in FIGS. 8 to 9.

FIG. 8 shows (a) the charge/discharge capacity and (b) the long-term lifespan characteristics of the electrode prepared in Example 3 of the present invention.

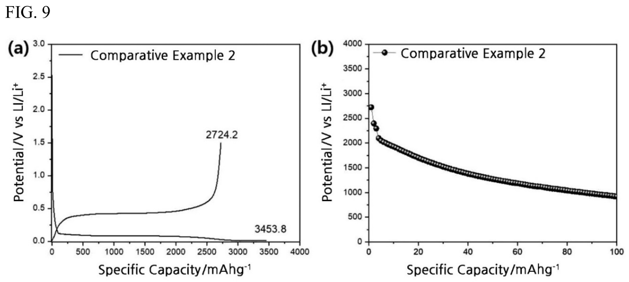

FIG. 9 shows (a) the charge/discharge capacity and (b) the long-term lifespan characteristics of the electrode prepared in Comparative Example 2 of the present invention.

Referring to FIGS. 8 (a) and 9 (a), it can be seen that the charge capacity of the electrode prepared in Example 3 including the electrode additive of the present invention and Comparative Example 2 including only silicon powder are 3692.2 mAh/g and 3453.8 mAh/g, respectively, and the discharge capacity is 3326.4 mAh/g and 2724.2 mAh/g, respectively, which confirms that the electrode additive of the present invention can remarkably improve the capacity and charge/discharge efficiency of the electrode.

Referring to FIGS. 8 (b) and 9 (b), it can be confirmed that the capacity retention characteristic of the electrode of Comparative Example 2 including only silicon powder is poor because the capacity decreases to half of the initial capacity after 100 cycles. On the other hand, it can be seen that the capacity of the electrode of Example 3 including the electrode additive of the present invention is maintained at an excellent level even after 100 cycles.

Through this, it can be seen that the electrode additive of the present invention has excellent conductivity, can effectively alleviate the volume change of the silicon active material to improve the capacity retention characteristic, and has the characteristic of being dissociated like an ionic compound in the electrolyte, thereby improving capacity and charge/discharge efficiency.

### Experimental Example 3

The capacity retention rate of the batteries using the electrodes prepared in Example 4 and Comparative Example 3 was measured, and the results are shown in Table 2 below. At this time, the first cycle capacity of all electrodes prepared in Example 4 and Comparative Example 3 started with an expression of 1,600 mAh/g or more, and the capacity of the electrode of Example 4 was stabilized after 15-17 cycles.

**Table 2**

| C-SiOₓ/Li Cell Test Results | Example 4 | | Comparative Example 3 | |
|---|---|---|---|---|
| Capacity Retention Rate (at 70% retention point) | 400 cycles (1,000mAh/g at 400 cycles) | | 16 cycles | |
| Discharge Specific Capacity according to Rate | 1C | 2C | 1C | 2C |
| | 1,300 mAh/g | 1,200 mAh/g | 500 mAh/g | 400 mAh/g |

As shown in Table 2, the battery using the electrode of Example 4 of the present invention shows a specific capacity of 1,200 mAh or more at 100 cycles (1,000 mAh at 400 cycles), whereas Comparative Example 3 could no longer operate and immediate capacity decrease was observed.

### Experimental Example 4

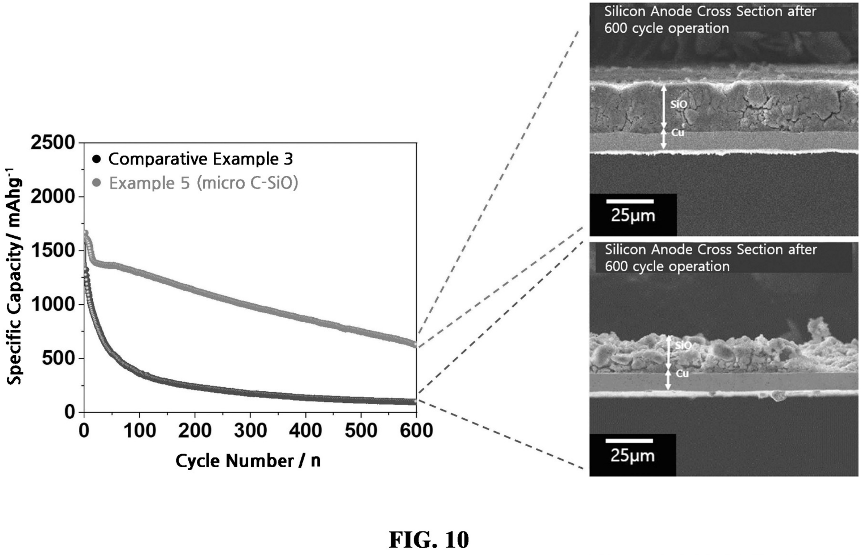

A half cell using 1 M LiPF6 in EC:EMC:DEC (2:2:5, v/v/v) + 10 wt% FEC as an electrolyte was operated at a rate of 0.5 C using the electrodes of Example 5 and Comparative Example 3, respectively, and the specific capacity according to the cycle and a scanning electron microscope (SEM) image of a cross-section are shown in FIG. 10.

FIG. 10 shows the specific capacity according to the cycle and a scanning electron microscope (SEM) image of a cross-section of a half-cell using the electrodes of Example 5 and Comparative Example 3 of the present invention.

As shown in FIG. 10, the electrode of Comparative Example 3 showed a sharp decrease in specific capacity as the number of cycles increased, and dendrites formed on the electrode and showed an uneven surface, resulting in very poor lifespan characteristics, whereas the electrode of Example 5 maintained its specific capacity in an excellent range even when the number of cycles increased, and the electrode layer was uniformly maintained at the same level as the initial state.

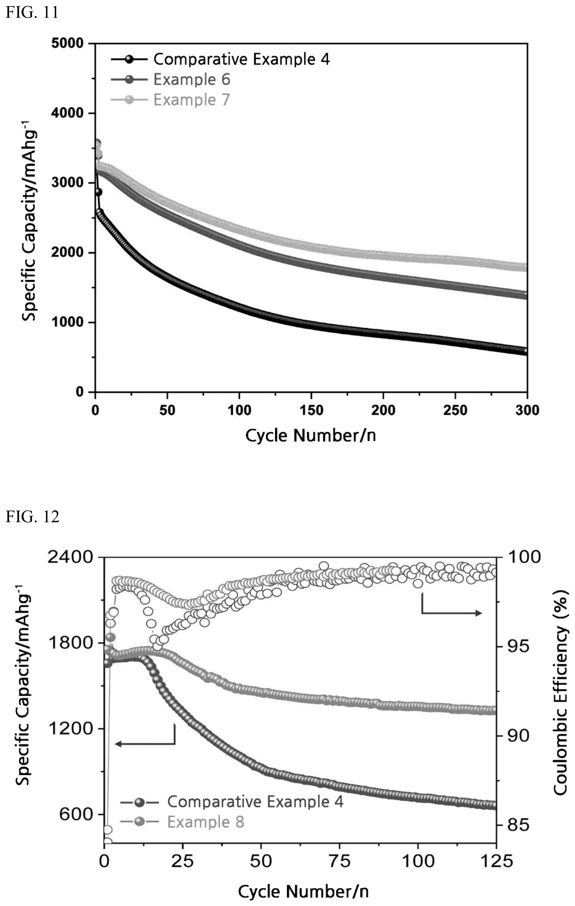

A half cell using 1 M LiPF6 in EC:EMC:DEC (2:2:5, v/v/v) + 10 wt% FEC as an electrolyte was operated at a rate of 0.5 C using the electrodes of Examples 6 to 7 and Comparative Example 4, respectively, and the specific capacity according to the cycle is shown in FIG. 11 and Table 3 below.

FIG. 11 shows the specific capacity graph according to the cycle of a half-cell using the electrodes of Examples 6 to 7 and Comparative Example 4 of the present invention.

**Table 3**

| micro Si/Li Cell Test Results | Example 6 | Comparative Example 4 |
|---|---|---|
| Capacity Retention Rate (at 70% retention point) | 125 cycles (2,275 mAh/g) | 50 cycles |

As shown in FIG. 11 and Table 3, the electrode of Comparative Example 4 showed a sharp decrease in specific capacity as the number of cycles increased, resulting in very poor lifespan characteristics, whereas the electrodes of Examples 6 to 7 maintained the specific capacity in an excellent range even when the number of cycles increased, confirming that the lifespan characteristic was very excellent.

In addition, among Examples 6 to 7, the lifespan characteristic of Example 7, in which the ratio of the additive was 1.3%, was more excellent.

### Experimental Example 5

A half cell using 1 M LiPF6 in EC:EMC:DEC (2:2:5, v/v/v) + 10 wt% FEC as an electrolyte was operated at a rate of 0.5 C using the electrodes of Example 8 and Comparative Example 5, respectively, and the specific capacity according to the cycle and a scanning electron microscope (SEM) image of a cross-section are shown in FIGS. 12 to 13.

FIG. 12 is a graph showing the specific capacity and Coulombic efficiency according to the cycle of a half-cell using the electrodes of Example 8 and Comparative Example 5 of the present invention.

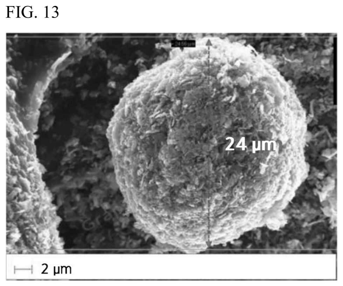

FIG. 13 shows a scanning electron microscope (SEM) image of the electrode prepared in Example 8 of the present invention.

**Table 4**

| C-SiOₓ/Li Cell Test Results | Example 8 | Comparative Example 5 |
|---|---|---|
| Capacity Retention Rate (at 70% retention point) | 125 cycles (Current point NOT reached) | 50 cycles |

As shown in FIGS. 12 to 13 and Table 4, even in the electrochemical evaluation using an active material with a relatively large particle size (median particle size of silicon anode material is 13 um (micro size)), Example 8 showed very excellent lifespan characteristics.

### Experimental Example 6

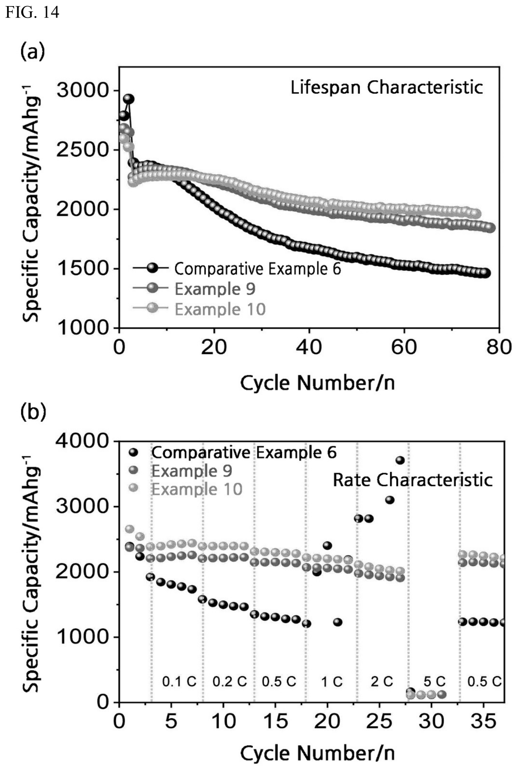

A half cell using 1 M LiPF6 in EC:EMC:DEC (2:2:5, v/v/v) + 10 wt% FEC as an electrolyte was operated at a rate of 0.5 C using the electrodes of Examples 9 to 10 and Comparative Example 6, respectively, and the specific capacity according to the cycle is shown in FIG. 14 and Table 5 below.

FIG. 14 shows (a) the lifespan characteristic and (b) the rate characteristic graph of a half-cell using the electrodes of Examples 9 to 10 and Comparative Example 6 of the present invention.

**Table 5**

| micro Si/Li | Example 10 | | Comparative Example 7 | |
|---|---|---|---|---|
| Cell Test Results | | | | |
| Capacity Retention Rate (at 70% retention point) | 70 cycles (Current point NOT reached) | | 40 cycles | |
| Discharge Specific Capacity according to Rate | 0.5C | 1C | 0.5C | 1C |
| | 2,312 mAh/g | 2,218 mAh/g | 1,350 mAh/g | Abnormal Operation |

As shown in FIG. 14 and Table 6, it was confirmed that the lifespan characteristic of Example 10 was 1.75 times or more superior to that of Comparative Example 6. In addition, as a result of electrochemical evaluation at different charge/discharge rates of 0.5, 1 c-rate, it can be confirmed that the discharge specific capacity of Example 10 is overwhelmingly superior under both conditions.

### Experimental Example 6

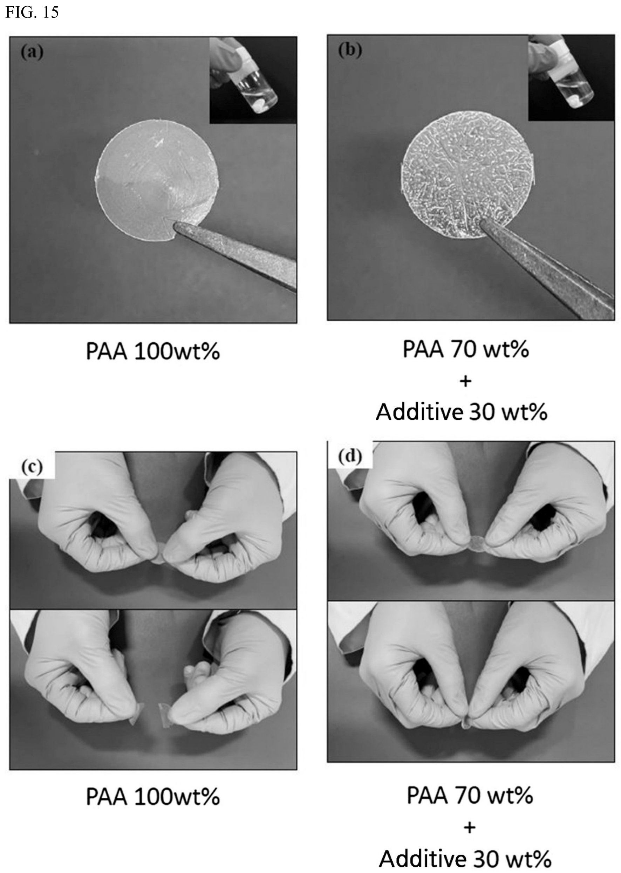

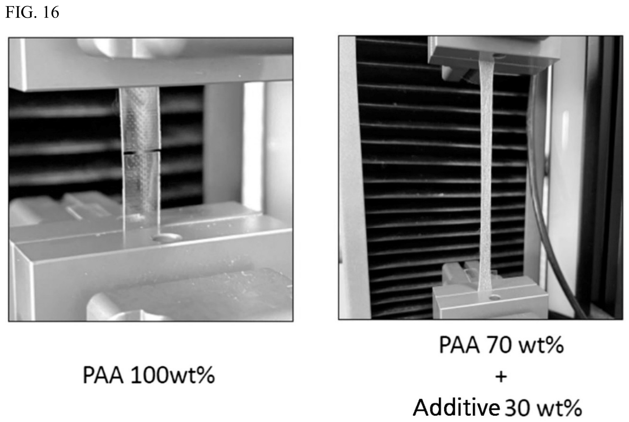

In order to confirm whether the electrode additive of the present invention can impart flexibility to the binder, the electrode additive prepared in Example 1 was mixed with PAA used as a conventional binder in a weight ratio of 70:30, and flexibility was compared and analyzed with that when only PAA was used, and the results are shown in FIGS. 15 and 16.

FIG. 15 shows photographic images (a, b) after preparation and (c, d) after bending of (a, c) PAA 100 wt% and (b, d) a binder including the electrode additive prepared in Example 1 of the present invention (PAA 70 wt% + additive 30 wt%).

As shown in FIG. 15, PAA conventionally used as a binder
was immediately cut in the bent state when used alone, showing no flexible characteristics at all, but in the case of the binder incorporated with the electrode additive of the present invention, it was confirmed that the flexibility was remarkably improved by maintaining the original shape without being cut even in the bent state.

FIG. 16 shows photographic images of the process of the tensile test results of PAA 100 wt% and a binder including the electrode additive prepared in Example 1 of the present invention (PAA 70 wt% + additive 30 wt%).

As shown in FIG. 16, as a result of evaluating the tensile ability of PAA alone and PAA incorporated with the electrode additive of the present invention under the same conditions, PAA, when used alone, had a tensile strain rate of 1% and was cut in the initial stage, showing no flexible characteristics at all, but in the case of the binder incorporated with the electrode additive of the present invention, the tensile strain rate was 400%. Through this, it was confirmed that the electrode additive of the present invention can regulate the segmental mobility of the binder chain to impart sufficient flexibility to withstand volume change of the silicon electrode during cycling.

## Claims

1. An electrode additive comprising a composite of a carbon material including an oxygen-containing functional group; and lithium.

2. The electrode additive according to claim 1, **characterized in that** the lithium is bonded to the oxygen-containing functional group.

3. The electrode additive according to claim 1, **characterized in that** the oxygen-containing functional group is one or more of a hydroxyl group, an ether group, an aldehyde group, an epoxy group, an amide group, a carboxyl group, and a ketone group.

4. The electrode additive according to claim 1, **characterized in that** the carbon material is one or more of graphene quantum dots, graphene, graphene oxide, carbon black, carbon nanotubes, graphite, fullerene, and carbon nanofiber.

5. The electrode additive according to claim 1, **characterized in that** the lithium is included in an amount of 8 to 20 wt% based on 100 wt% of the total electrode additive.

6. The electrode additive according to claim 1, **characterized in that** the size of the carbon material is 12 nm or less.

7. An anode for a lithium secondary battery, comprising the electrode additive according to any one of claims 1 to 6; and an anode active material.

8. The anode for a lithium secondary battery according to claim 7, **characterized in that** the anode active material includes one or more of silicon (Si), tin (Sn), germanium (Ge), an oxide thereof, an alloy thereof, and a combination thereof.

9. The anode for a lithium secondary battery according to claim 7, **characterized in that** the weight ratio of the anode active material and the electrode additive is 100:1 to 8.

10. The anode for a lithium secondary battery according to claim 7, **characterized by** further comprising a binder.

11. The anode for a lithium secondary battery according to claim 7, **characterized by** further comprising a conductive material.

12. A lithium secondary battery comprising the anode according to any one of claims 7 to 11.

13. A capacitor comprising the anode according to any one of claims 7 to 11.

14. A method for manufacturing an anode for a lithium secondary battery, comprising:
(I) preparing an electrode additive by mixing a carbon material including an oxygen-containing functional group and a lithium precursor;
(II) preparing an anode slurry by adding the electrode additive obtained in the step (I) and the anode active material to a solvent; and
(III) applying and drying the anode slurry.

15. The method for manufacturing an anode for a lithium secondary battery according to claim 14, **characterized in that** the oxygen-containing functional group is one or more of a hydroxyl group, an ether group, an aldehyde group, an epoxy group, an amide group, a carboxyl group, and a ketone group.

16. The method for manufacturing an anode for a lithium secondary battery according to claim 14, **characterized in that** the carbon material is one or more of graphene quantum dots, graphene, graphene oxide, carbon black, carbon nanotubes, graphite, fullerene, and carbon nanofiber.

17. The method for manufacturing an anode for a lithium secondary battery according to claim 14, **characterized in that** the lithium precursor is one or more of lithium hydroxide, lithium carbonate, lithium sulfate, lithium oxide, and lithium chloride.

18. The method for manufacturing an anode for a lithium secondary battery according to claim 14, **characterized in that** the lithium is included in an amount of 8 to 20 wt% based on 100 wt% of the total electrode additive.

19. The method for manufacturing an anode for a lithium secondary battery according to claim 14, **characterized in that** the weight ratio of the anode active material and the electrode additive is 100:1 to 8.

20. The method for manufacturing an anode for a lithium secondary battery according to claim 14, **characterized in that** the anode slurry further comprises a binder.

21. The method for manufacturing an anode for a lithium secondary battery according to claim 14, **characterized in that** the anode slurry further comprises a conductive material.

22. The method for manufacturing an anode for a lithium secondary battery according to claim 14, **characterized in that** the drying is performed at 80 to 200 °C for 30 minutes to 5 hours.
